# EUROPEAN PATENT APPLICATION

(11) **EP 3 226 129 A1**
(43) Date of publication of application: **04.10.2017**
(21) Application number: 17161536.2
(22) Date of filing: 17.03.2017
(51) Int. Cl.: G06F 9/445

(54) **RFID-BASED DEVICE WIRELESS UPDATES**

(30) Priority: 30.03.2016 US 201615085315
(71) Applicant: Motorola Mobility LLC, Chicago, IL 60654 (US)
(72) Inventor: DEBATES, Scott, Crystal Lake, IL Illinois 60014 (US); LAUTNER, Douglas, Round Lake, IL Illinois 60073 (US); ZHAO, Hong, Naperville, IL Illinois 60564 (US); SHAH, Jagatkumar, Lake in the Hills, IL Illinois 60156 (US)
(74) Representative: Openshaw & Co.

(57) **Abstract**

In embodiments of RFID-based device wireless updates, a RFID reader interrogates a RFID tag of a device, and receives a response that indicates device software is not a latest version. The RFID reader communicates wireless network connection information and a file location of a device software update to the RFID tag of the device, and RFID tag memory maintains the file location and the wireless network connection information that is associated with a wireless network. The RFID reader communicates a power-up command to the RFID tag to initiate enabling an interrupt line to power the device on. A bootloader application executing on the device determines that the device software update is available. The bootloader application then obtains the wireless network connection information and configures the device for communication via the wireless network. The bootloader application also obtains the file location and downloads the device software update via the wireless network.

## Description

### BACKGROUND

Portable devices, such as mobile phones, tablet devices, digital cameras, and other types of computing and electronic devices are manufactured and then packaged for shipment and retail sales. Typically, the devices are manufactured and packaged with a current firmware and/or software image, such as the operating system of a device. However, by the time the devices are packaged and shipped to a distributor for retail sales, the initial firmware and/or software may be out-of-date, or may not be the latest version for a particular device. This can cause an unfavorable user experience and customer dissatisfaction when having to first update the firmware and/or software for a newly purchased device. This need to update the software and/or firmware of devices in existing inventory is overly expensive and results in lost revenue, given that the devices need to be removed from the packaging and then re-packaged, in addition to the labor, time, and infrastructure needed to facilitate updating the devices.

### BRIEF DESCRIPTION OF THE DRAWINGS

Embodiments of RFID-based device wireless updates are described with reference to the following Figures. The same numbers may be used throughout to reference like features and components that are shown in the Figures:
FIG. 1 illustrates an example system in which embodiments of RFID-based device wireless updates can be implemented.
FIG. 2 further illustrates an example system in which embodiments of RFID-based device wireless updates can be implemented.
FIG. 3 illustrates example method(s) of RFID-based device wireless updates in accordance with one or more embodiments.
FIG. 4 illustrates example method(s) of RFID-based device wireless updates in accordance with one or more embodiments.
FIG. 5 illustrates example method(s) of RFID-based device wireless updates in accordance with one or more embodiments.
FIG. 6 illustrates various components of an example device that can implement embodiments of RFID-based device wireless updates.

### DETAILED DESCRIPTION

Embodiments of RFID-based device wireless updates are described, such as for any type of computing, mobile, and/or electronic device that may be implemented with a radio-frequency identification (RFID) tag that can be utilized to update the device firmware and/or software over-the-air (*e*.*g*., via a wireless network). Further, even while a device is still packaged in shipping or retail packaging, a RFID tag can be utilized to determine whether the device firmware and/or software, such as an operating system of the device, is the latest version, or whether the device firmware or software needs to be updated. As noted above, devices are generally manufactured with a current firmware and/or software image, such as the operating system of a device. However, by the time the devices are packaged and shipped to a distributor, the initial firmware and/or software may be out-of-date, or may not be the latest version for a particular device. Rather than having to open the packaging of each device, or selling a device to a consumer with out-of-date software, embodiments of RFID-based device wireless updates can be implemented to update the device firmware and/or software, even for devices that are still in shipping and/or retail packaging, either at a manufacturing facility, in-transit, or stored at a distribution or retail site.

A mobile phone device, for example, can include a RFID tag that is implemented to share encrypted information about the device software, and can decrypt and update the device software and/or firmware over-the-air (*e*.*g*., via wireless communication). The RFID tag hardware provides a communication bus to read secure data that a processor of the mobile device can read, and also provides an interrupt line connected to a power manager integrated circuit (PMIC) of the mobile device to allow booting of the device from a dormant state. The described system can be used in manufacturing, distribution, and service centers, as well as may be implemented as a kiosk from which a user can update device firmware and software in a device.

In aspects of RFID-based device wireless updates, a RFID reader can be used to interrogate a RFID tag of a device, and receive a response of a software version indicator that indicates device software on the device is not a latest version. The RFID reader communicates wireless network connection information and a file location of a device software update to the RFID tag of the device. The RFID tag includes memory to maintain the file location and the wireless network connection information that is associated with a wireless network. The RFID reader can then communicate a power-up command to the RFID tag effective to initiate the RFID tag enabling an interrupt enable line to power the device on.

A bootloader application executing on the device can determine from an update enable flag stored in the RFID tag memory that the device software update is available. The bootloader application can then obtain the wireless network connection information stored in the RFID tag memory effective to configure a wireless radio system of the device for communication via the wireless network. The bootloader application can also obtain the file location of the device software update from the RFID tag memory, and download the device software update from the file location via the wireless network. The device software update can then be stored in device memory and the device powered-down with the device software update available from the device memory when the device is subsequently powered on, such as when the device is purchased, opened from the packaging by a consumer, and powered on. Alternatively, the device software update can be downloaded and stored in device memory, and the update to the device software is completed before the device is powered off.

In other aspects of RFID-based device wireless updates, the device software update can be available locally on the RFID reader, such as for a smaller-sized software patch, or for a new file for direct download to the RFID tag of the device. The update can then be pushed directly from the RFID reader to the RFID tag memory of the embedded RFID tag, and the RFID reader communicates the power-up command to the RFID tag of the device. In this instance, the file location of the software update that is stored in the RFID tag memory indicates that the device software update is stored locally in the RFID tag memory, and the bootloader application of the device can access the software update from the RFID tag memory when the device is powered-up.

As used herein, the term "powered on" indicates that a device is on and in an operational state, and the term "powered off" indicates that the device is off. The term "powered-up" is used to indicate that a device is in the process of turning-on, such as when a user of the device presses the power switch to turn the device on, or when the power switch is toggled to turn the device on. After the device has "powered-up" from the "powered off" state, the device is then in the "powered on" state. The term "powered-down" is used to indicate that a device is in the process of turning-off, such as when the user of the device presses the power switch to turn the device off, or when the power switch is toggled to turn the device off. After the device has "powered-down" from the "powered on" state, the device is then in the "powered off" state.

While features and concepts of RFID-based device wireless updates can be implemented in any number of different devices, systems, environments, and/or configurations, embodiments of RFID-based device wireless updates are described in the context of the following example devices, systems, and methods.

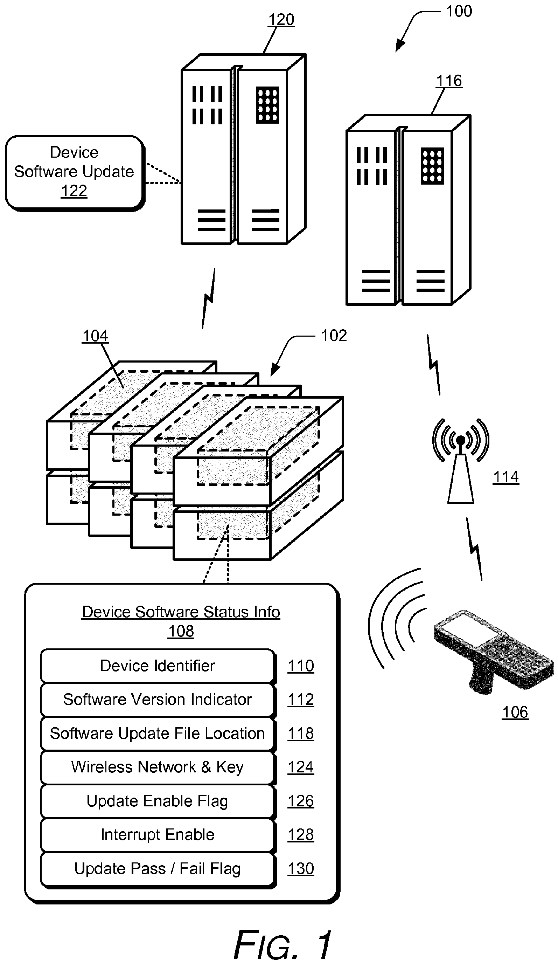

FIG. 1 illustrates an example system 100 in which embodiments of RFID-based device wireless updates can be implemented. The example system includes a representation 102 of multiple devices 104, such as devices packaged in shipping and/or retail packaging, either at a manufacturing facility, in-transit, or stored at a distribution or retail site. The devices 104 may be any type of mobile phone, tablet device, computing device (*e*.*g*., portable and desktop computers), consumer electronic device (*e*.*g*., television, appliance, and the like), or other types of computing and electronic devices that are typically battery powered or may have a small coin cell battery used to boot a device bios or bootloader application. As noted above, the devices 104 are generally manufactured with a current firmware and/or software image, such as the operating system of a device. However, by the time the devices are packaged and shipped to a distributor, the initial firmware and/or software may be out-of-date, or may not be the latest version for a particular device.

A radio-frequency identification (RFID) reader 106 can be used to interrogate a RFID tag in each of the devices 104, notably while the devices remain packaged, to determine whether one or more of the devices are in need of a firmware or software update. Although the examples and discussion herein refer mainly to device software and whether the device software is up-to-date or is the latest version of the device software, the techniques described herein may be similarly implemented for any type of device firmware. In this example, each of the devices 104 maintain device software status information 108, such as data stored in a memory of the RFID tag in each respective device. In response to the RFID reader 106 interrogating the devices 104, the RFID reader can receive a response of a device identifier 110 and a software version indicator 112 from each of the respective devices.

The RFID reader 106 can then communicate, via a wireless network 114 (*e*.*g*., a Wi-Fi network), with a server device 116 to determine whether the device software for each of the devices 104 is or is not the latest version of the device software. For example, the RFID reader 106 can communicate the device identifier 110 and the software version indicator 112 for one of the devices 104 to the server device 116, which then compares the information with similar stored information about the device to assess whether the particular device has the latest version of device software. Alternatively, the server device 116 can communicate the device information back to the RFID reader 106, which then determines whether the particular device has the latest version of device software.

In the event that the device 104 does not have the latest version of device software, as determined at the server device 116 and/or at the RFID reader 106, the RFID reader 106 can communicate a file location of a device software update to the RFID tag in the device, and the software update file location 118 is stored in the RFID tag memory. In implementations, the file location 118 of a device software update is a universal resource locator (URL) to a server device 120 that maintains the device software update 122 for the particular device 104 that does not have the latest version of device software. Although shown and described as separate server devices, the server device 116 that assesses whether the device 104 has the latest version of the device software, and the server device 120 that maintains the device software update 122, can be implemented together as one server device, or alternatively, may be implemented as multiple server devices.

Additionally, the RFID reader 106 can communicate wireless network connection information to the RFID tag of the device, and the wireless network connection information that is associated with the wireless network 114 is stored in the RFID tag memory as the wireless network and key 124. The wireless network connection information includes an identification of the wireless network 114 and the network credentials (*e*.*g*., the network key) to join the wireless network for wireless communication. The RFID reader 106 can also communicate an update indicator to the RFID tag of the device 104 and the update indicator is set in the RFID tag memory as an update enable flag 126, which then serves as a software update indication for a bootloader application of the device 104 when the device is powered-up. Further, the RFID reader 106 communicates a power-up command to the RFID tag of the device 104 and the power-up command is set in the RFID tag memory as an interrupt enable 128, which is effective to initiate the RFID tag enabling an interrupt line to power the device on, initiating the device to download the device software update from the file location utilizing the wireless network connection information.

Alternatively, the server device 120 can communicate the device software update 122 to the RFID reader 106, such as for a smaller-sized software patch, or for a new file for direct download to the RFID tag of the device. The update can then be pushed directly from the RFID reader to the RFID tag memory of the embedded RFID tag, and the RFID reader 106 communicates the power-up command to the RFID tag as the interrupt enable 128. In this instance, the software update file location 118 that is stored in the RFID tag memory indicates that the device software update 122 is stored locally in the RFID tag memory, and the wireless network connection information that is associated with the wireless network 114 would not be needed by the bootloader application of the device 104 when the device is powered-up.

When the interrupt enable 128 is set in the RFID tag memory of the device 104, the device powers-up and a bootloader application is executed on the device. The bootloader application reads the update enable flag 126 stored in the RFID tag memory, which indicates to the bootloader application that the device software update 122 for the device software is available. The bootloader application can obtain the wireless network and key 124 (*e*.*g*., the wireless network connection information) that is stored in the RFID tag memory, and configures a wireless radio system (*e*.*g*., Wi-Fi system) of the device for communication via the wireless network 114. The bootloader application also obtains the software update file location 118 from the RFID tag memory, and in the first example, communicates with the server device 120 to download the device software update 122 from the file location via the wireless network 114. Alternatively, the bootloader application reads the update enable flag 126 stored in the RFID tag memory and, in the case of the software update being stored locally in the RFID tag memory of the RFID tag, the bootloader application reads the device software update 122 from the RFID tag memory.

The device software update 122 can then be stored in device memory (*e*.*g*., when downloaded from the server device 120 or read from the RFID tag memory) and the device powered-down with the device software update available from the device memory when the device is subsequently powered on, such as when the device is purchased, opened from the packaging by a consumer, and powered on. The device software update 122 can then be applied to update the device software, the software version indicator 112 in the RFID tag memory updated to reflect the now current version of the device software, and an update pass or fail flag 130 can be set accordingly. As an alternative to just downloading and storing the device software update 122, and then powering-down the device 104, the bootloader application can download and store the device software update 122, as well as perform updating the device software with the device software update before the device is powered off. The bootloader application can also update the software version indicator 112 in the RFID tag memory, set the update pass or fail flag 130 accordingly, and then initiate powering-down the device.

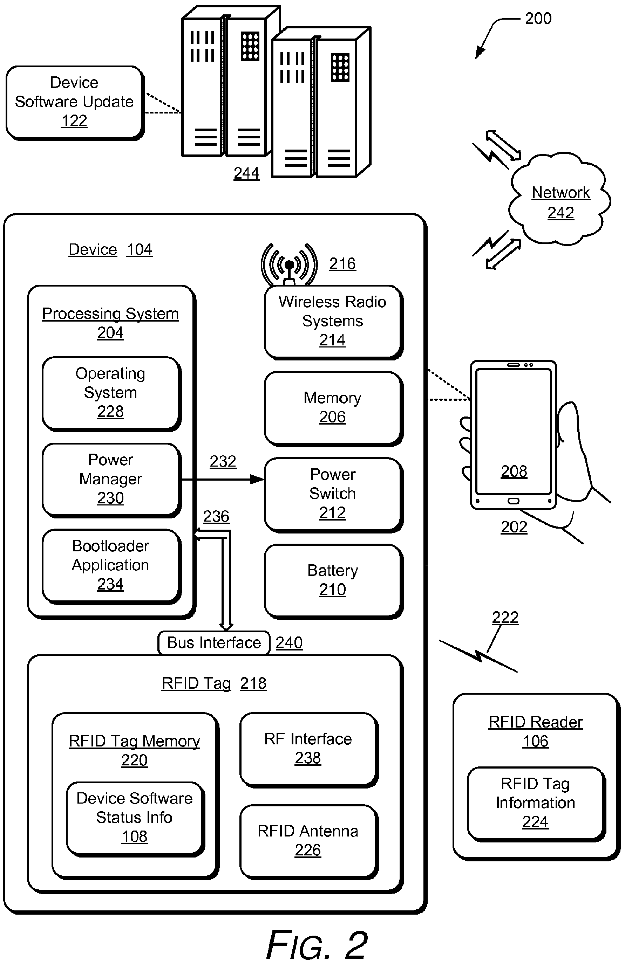

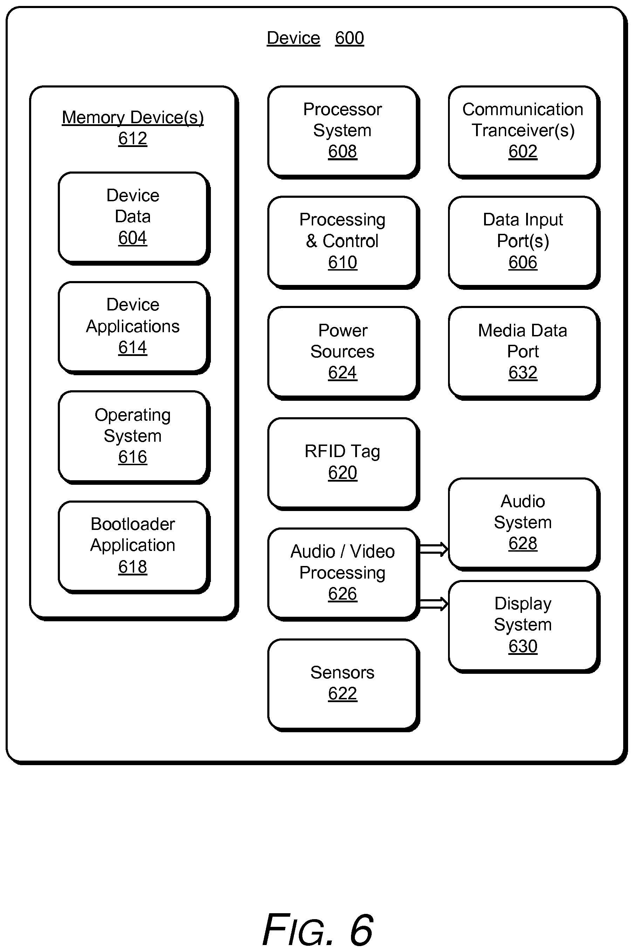

FIG. 2 further illustrates an example system 200 with a device 104 as described with reference to FIG. 1, and in which embodiments of RFID-based device wireless updates can be implemented. As noted above, the example device 104 may be any type of computing and/or electronic device, such as a mobile phone 202, tablet device, digital camera, or other types of consumer electronics, appliances, computers, and the like. The device 104 can be implemented with various components, such as a processing system 204 (*e*.*g*., one or more processors), a memory 206, an integrated display device 208, and any number and combination of various components as further described with reference to the example device shown in FIG. 6. Additionally, the device 104 includes a power source, such as a battery 210, to power the various device components. The device 104 also includes a power switch 212 that can be toggled to power-up or power-down the device.

Further, the device 104 can include the different wireless radio systems 214, such as for Wi-Fi, Bluetooth^{™}, Mobile Broadband, LTE, Near Field Communication (NFC), or any other wireless radio system or format for communication via respective wireless networks (*e*.*g*., the wireless network 114 as described with reference to FIG. 1). Generally, the device 104 implements the wireless radio systems 214 that each include a radio device, antenna 216, and chipset that is implemented for cellular, wireless, and other network communication with other devices, networks, and services. A wireless radio system 214 can be configured to implement any suitable communication protocol or standard.

In this example, the device 104 implements components and features of a radio-frequency identification (RFID) tag 218 that is implemented to store, in memory 220 of the RFID tag, at least the device software status information 108 as shown and described with reference to FIG. 1. Alternatively, any suitable non-volatile memory (*e*.*g*., the device memory 206) can be used to store the data and information that is associated with the device 104 separate from the RFID tag 218 and the RFID tag memory 220. The RFID tag 218 is also implemented for two-way wireless communication 222 with RFID readers, such as the RFID reader 106 (also referred to as a RFID interrogator) that interrogates the RFID tag 218 for the device software status information 108 that is stored in the RFID tag memory 220. Generally, RFID tags are small electronic tags or labels that can be programmed with data and other information. The RFID reader 106 can transmit an interrogation signal as a broadcast message requesting RFID tags that are in range to return the data and information that the RFID tags have stored. The RFID tags can then wirelessly communicate the data and information to the RFID reader via a radio frequency (RF) communication channel, which the RFID reader 106 receives as the RFID tag information 224.

In implementations, a RFID tag (*e*.*g*., the RFID tag 218) can include an ASIC / CPU module, a communication bus for communicating with the processing system 204 of the device 104, an RFID antenna 226, and a transmitter and receiver (or may be implemented as a transceiver) for two-way communication with the RFID reader 106. In response to receipt of an interrogation signal, the ASIC / CPU module of the RFID tag 218 formulates a response that may include data from the RFID tag, and the response is wirelessly transmitted to the RFID reader. The response signals from a RFID tag 218 can be communicated using low frequency (LF), high frequency (HF), or ultra-high frequency (UHF) radio waves. The RFID tag data can be stored in non-volatile memory, and the ASIC / CPU module can be implemented as fixed or programmable logic for processing the RFID tag data, as well as modulating and demodulating the RF signals.

In this example, the processing system 204 includes an operating system 228 of the device 104, and a power manager 230 that controls and toggles an interrupt enable line 232 connected to the power switch 212. In an event that the device 104 has been stowed, but inadvertently powered on, the device can then be powered-down remotely while still in the packaging. Further, the device 104 can be powered-up to download the device software update 122 and then initiated to power-down utilizing the interrupt enable line 232. The processing system 204 also includes a bootloader application 234 to implement embodiments of RFID-based device wireless updates. The bootloader application 234 can be implemented as a software application or module, such as computer-executable software instructions that are executable with a processor (*e*.*g*., with the processing system 204).

As software applications, the operating system 228, the power manager 230, and the bootloader application 234 can be stored on computer-readable storage memory (*e*.*g*., the device memory 206), such as any suitable memory device or electronic data storage implemented in the device. Further, although shown and described as separate components, the power manager 230 and/or the bootloader application 234 may be implemented as a module or component of the operating system 228. In implementations, the processing system 204, to include the operating system 228, the power manager 230, and/or the bootloader application 234 can communicate with the RFID tag 218 via a communication bus 236 that is implemented in the device 104. In implementations, the RFID tag memory 220 (*e*.*g*., non-volatile memory) can be accessed by the RFID reader 106 via a radio frequency (RF) interface 238 of the RFID tag 218, or can be accessed via a bus interface 240 that connects the communication bus 236 to the RFID tag. The processing system 204 can communicate with the RFID tag 218 via the communication bus 236 and the bus interface 240 when the device 104 is powered-on.

In this example, the interrupt enable line 232 is connected to the power switch 212 of the device 104, and the power switch can be turned on and off via an output signal from the RFID tag 218, via the bus interface 240 and the communication bus 236 to the power manager 230. As noted above, the device 104 can be wirelessly powered-up (*e*.*g*., turned-on) or powered-down (*e*.*g*., turned off) by a command sent from the external RFID reader 106 to the RFID tag 218, which then communicates the command to the power manager 230 that toggles the interrupt enable line 232 connected to the power switch 212. The device 104 can also be powered-down remotely while still in the packaging.

As described with reference to FIG. 1, the RFID reader 106 can be used to interrogate the RFID tag 218 in the device 104, notably while the device is still packaged for shipment and/or retail, to determine whether the device needs a firmware or software update, such as an update of the operating system 228. In response to the interrogation from the RFID reader 106, the RFID reader can receive a response of the device identifier 110 and the software version indicator 112 from the device 104, as stored in the RFID tag memory 220. The RFID reader 106 can then communicate, via a network 242 (*e*.*g*., a Wi-Fi network), with a server device 244 to determine whether the device software for the device 104 is the latest version of the device software. For example, the RFID reader 106 can communicate the device identifier 110 and the software version indicator 112 for the device 104 to the server device 244, which then compares the information with similar stored information about the device to assess whether the particular device has the latest version of device software. Alternatively, the server device 244 can communicate the device information back to the RFID reader 106, which then determines whether the particular device has the latest version of device software.

The example system 200 includes the network 242 that generally represents any type of communication and data network, and any of the server and user devices described herein can communicate via the network 242 (or combination of networks), such as for data communication between the device 104 and the server device 244. The network 242 can be implemented to include wired and/or wireless networks (e*.g*., to include the wireless network 114). The network can also be implemented using any type of network topology and/or communication protocol, and can be represented or otherwise implemented as a combination of two or more networks, to include cellular networks, IP-based networks, and/or the Internet. The network 242 may also include mobile operator networks that are managed by a network provider of a cellular network, a mobile network operator, and/or other network operators, such as a communication service provider, mobile phone provider, and/or Internet service provider.

In the event that the device 104 does not have the latest version of device software, as determined at the server device 244 and/or at the RFID reader 106, the RFID reader 106 can communicate the file location of the device software update 122 to the RFID tag 218 in the device 104, and the software update file location 118 is stored in the RFID tag memory 220. In implementations, the file location 118 of the device software update 122 is a universal resource locator (URL) to the server device 244 that maintains the device software update for the device 104 that does not have the latest version of device software. Additionally, the RFID reader 106 can communicate wireless network connection information to the RFID tag 218 of the device 104, and the wireless network connection information that is associated with the network 242 is stored in the RFID tag memory 220 as the wireless network and key 124. The wireless network connection information includes an identification of the network 242 and the network credentials (e.g., the network key) to join the wireless network for wireless communication. The RFID reader 106 can also communicate an update indicator to the RFID tag 218 of the device 104 and the update indicator is set in the RFID tag memory 220 as the update enable flag 126, which then serves as a software update indication for the bootloader application 234 of the device 104 when the device is powered-up. As an alternative noted above, the device software update 122 can be communicated to the RFID reader 106, such as for a smaller-sized software patch, or for a new file for direct download to the RFID tag 218 of the device 104. The update can then be pushed directly from the RFID reader 106 to the RFID tag memory 220 of the embedded RFID tag 218 in the device.

Further, the RFID reader 106 communicates a power-up command to the RFID tag 218 of the device 104 and the power-up command is set in the RFID tag memory 220 as the interrupt enable 128, which is effective to initiate the RFID tag 218 enabling the interrupt enable line 232 via the power manager 230 to power the device on, initiating the device to download the device software update 122 from the file location utilizing the wireless network connection information. When the interrupt enable 128 is set in the RFID tag memory 220 of the device 104, the device powers-up and the bootloader application 234 is executed on the device. The bootloader application reads the update enable flag 126 stored in the RFID tag memory 220, which indicates to the bootloader application that the device software update 122 for the device software is available. The bootloader application 234 obtains the wireless network and key 124 (e.g., the wireless network connection information) that is stored in the RFID tag memory 220, and configures a wireless radio system 214 (e.g., Wi-Fi system) of the device for communication via the network 242. The bootloader application 234 also obtains the software update file location 118 from the RFID tag memory 220, and in this example, communicates with the server device 244 to download the device software update 122 from the file location via the network 242. Alternatively, the bootloader application 234 obtains the device software update that is stored locally in the RFID tag memory 220.

The device software update 122 can then be stored in the device memory 206 and the device powered-down with the device software update available from the device memory when the device is subsequently powered on, such as when the device is purchased, opened from the packaging by a consumer, and powered on. The device software update 122 can then be applied to update the device software, the software version indicator 112 in the RFID tag memory 220 updated to reflect the now current version of the device software, and an update pass or fail flag 130 can be set accordingly. As an alternative to just downloading and storing the device software update 122, and then powering-down the device 104, the bootloader application 234 can download and store the device software update 122, as well as perform updating the device software with the device software update before the device is powered off. The bootloader application 234 can also update the software version indicator 112 in the RFID tag memory, set the update pass or fail flag 130 accordingly, and then initiate powering-down the device.

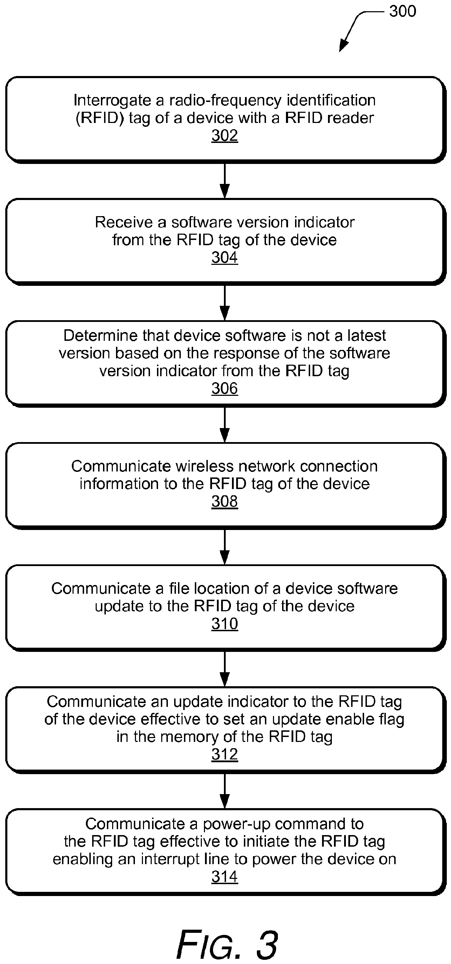

Example methods 300, 400, and 500 are described with reference to respective FIGs. 3, 4, and 5 in accordance with implementations of RFID-based device wireless updates. Generally, any services, components, modules, methods, and/or operations described herein can be implemented using software, firmware, hardware (*e.g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively or in addition, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 3 illustrates example method(s) 300 of RFID-based device wireless updates as described herein, and is generally described with reference to the RFID reader 106. The order in which the method is described is not intended to be construed as a limitation, and any number or combination of the described method operations can be performed in any order to perform a method, or an alternate method.

At 302, a radio-frequency identification (RFID) tag of a device is interrogated with a RFID reader. For example, the RFID reader 106 interrogates the RFID tag 218 in the device 104 to determine whether the device needs a firmware or software update, such as an update of the operating system 228. Notably, the RFID reader 106 interrogates the device 104 while the device is still packaged for shipment and/or retail, and while the device is powered off. At 304, a software version indicator is received from the RFID tag of the device. For example, the RFID reader 106 receives a response of the device identifier 110 and the software version indicator 112 from the device 104, as stored in the RFID tag memory 220.

At 306, a determination is made that device software is not a latest version based on the response of the software version indicator from the RFID tag. For example, the RFID reader 106 determines that the device software is not a latest version based on the response of the software version indicator 112 from the RFID tag 218. In implementations, the RFID reader 106 communicates the device identifier 110 and the software version indicator 112 for the device 104 to the server device 244, which then compares the information with similar stored information about the device to assess whether the particular device has the latest version of device software. Alternatively, the server device 244 communicates the device information back to the RFID reader 106, which then determines whether the device 104 has the latest version of device software.

At 308, wireless network connection information is communicated to the RFID tag of the device. For example, the RFID reader 106 communicates wireless network connection information to the RFID tag 218 of the device 104, and the wireless network connection information that is associated with the network 242 is stored in the RFID tag memory 220 as the wireless network and key 124. The wireless network connection information includes an identification of the network 242 and the network credentials (e.g., the network key) to join the wireless network for wireless communication.

At 310, a file location of a device software update is communicated to the RFID tag of the device. For example, the RFID reader 106 communicates the file location of the device software update 122 to the RFID tag 218 in the device 104, and the software update file location 118 is stored in the RFID tag memory 220. In implementations, the file location 118 of the device software update 122 is a universal resource locator (URL) to the server device 244 that maintains the device software update for the device 104 that does not have the latest version of device software.

At 312, an update indicator is communicated to the RFID tag of the device effective to set an update enable flag in the memory of the RFID tag. For example, the RFID reader 106 communicates an update indicator to the RFID tag 218 of the device 104 and the update indicator is set in the RFID tag memory 220 as the update enable flag 126, which then serves as a software update indication for the bootloader application 234 of the device 104 when the device is powered-up.

At 314, a power-up command is communicated to the RFID tag effective to initiate the RFID tag enabling an interrupt line to power the device on. For example, the RFID reader 106 communicates a power-up command to the RFID tag 218 of the device 104 and the power-up command is set in the RFID tag memory 220 as the interrupt enable 128, which is effective to initiate the RFID tag 218 enabling the interrupt enable line 232 via the power manager 230 to power the device on, initiating the device 104 to download the device software update 122 from the file location utilizing the wireless network connection information. When the interrupt enable 128 is set in the RFID tag memory 220 of the device 104, the device powers-up and the bootloader application 234 is executed on the device to download the device software update 122 from the file location utilizing the wireless network connection information.

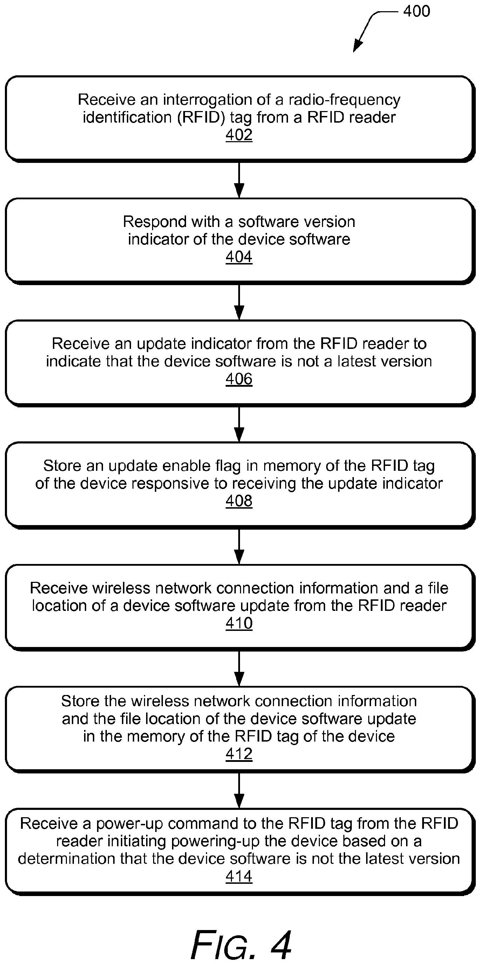

FIG. 4 illustrates example method(s) 400 of RFID-based device wireless updates, and is generally described with reference to the device 104 that implements the RFID tag 218. The order in which the method is described is not intended to be construed as a limitation, and any number or combination of the described method operations can be performed in any order to perform a method, or an alternate method.

At 402, an interrogation of a radio-frequency identification (RFID) tag is received from a RFID reader. For example, the RFID tag 218 receives an interrogation from the RFID reader 106 to determine whether the device needs a firmware or software update, such as an update of the operating system 228. The RFID reader 106 can interrogate the device 104 while the device is still packaged for shipment and/or retail, and while the device is powered off. At 404, a software version indicator of the device software is the response. For example, the RFID tag 218 responds to the RFID reader 106 with the device identifier 110 and the software version indicator 112, as stored in the RFID tag memory 220.

At 406, an update indicator is received from the RFID reader to indicate that the device software is not a latest version and, at 408, an update enable flag is stored in memory of the RFID tag of the device responsive to receiving the update indicator. For example, the RFID tag 218 receives an update indicator from the RFID reader 106 and the update indicator is set in the RFID tag memory 220 as the update enable flag 126, which then serves as a software update indication for the bootloader application 234 of the device 104 when the device is powered-up.

At 410, wireless network connection information and a file location of a device software update is received from a RFID reader and, at 412, the wireless network connection information and the file location of the device software update is stored in the memory of the RFID tag of the device. For example, the RFID tag 218 receives the wireless network connection information that is associated with the network 242 and stored in the RFID tag memory 220 as the wireless network and key 124, and the RFID tag 218 receives the file location of the device software update 122 from the RFID reader 106, and the software update file location 118 is stored in the RFID tag memory 220. The wireless network connection information includes an identification of the network 242 and the network credentials (e.g., the network key) to join the wireless network for wireless communication. The file location 118 of the device software update 122 can be a universal resource locator (URL) to the server device 244 that maintains the device software update for the device 104.

At 414, a power-up command to the RFID tag is received from the RFID reader initiating powering-up the device based on a determination that the device software is not the latest version. For example, the RFID tag 218 receives a power-up command from the RFID reader 106 that is set in the RFID tag memory 220 as the interrupt enable 128, which is effective to initiate the RFID tag 218 enabling the interrupt enable line 232 via the power manager 230 to power the device on, initiating the device 104 to download the device software update 122 from the file location utilizing the wireless network connection information.

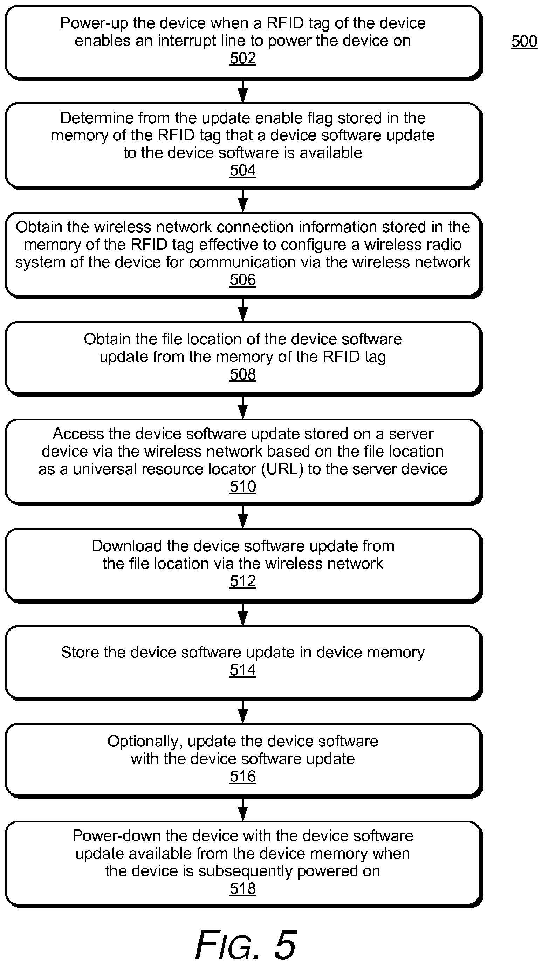

FIG. 5 illustrates example method(s) 500 of RFID-based device wireless updates, and is generally described with reference to the device 104 that implements the RFID tag 218. The order in which the method is described is not intended to be construed as a limitation, and any number or combination of the described method operations can be performed in any order to perform a method, or an alternate method.

At 502, the device is powered-up when the RFID tag of the device enables an interrupt line to power the device on. For example, the RFID tag 218 enables the interrupt enable line 232 via the power manager 230 to power the device 104 on. When the interrupt enable 128 is set in the RFID tag memory 220 of the device 104, the device powers-up and the bootloader application 234 is executed on the device.

At 504, a determination is made from the update enable flag stored in the memory of the RFID tag that a device software update to the device software is available. For example, the bootloader application 234 reads the update enable flag 126 stored in the RFID tag memory 220, which indicates to the bootloader application that the device software update 122 for the device software is available.

At 506, the wireless network connection information stored in the memory of the RFID tag is obtained effective to configure a wireless radio system of the device for communication via the wireless network. For example, the bootloader application 234 obtains the wireless network and key 124 (e.g., the wireless network connection information) that is stored in the RFID tag memory 220, and configures a wireless radio system 214 (e.g., Wi-Fi system) of the device for communication via the network 242.

At 508, the file location of the device software update is obtained from the memory of the RFID tag and, at 510, the device software update stored on a server device is accessed via the wireless network based on the file location as a universal resource locator (URL) to the server device. For example, the bootloader application 234 obtains the software update file location 118 from the RFID tag memory 220 and communicates with the server device 244 to download the device software update 122 from the file location via the network 242.

At 512, the device software update is downloaded from the file location via the wireless network and, at 514, the device software update is stored in device memory. For example, the bootloader application 234 initiates downloading the device software update 122 from the file location 118 at the server device 244 via the network 242, and the device software update 122 is stored in the device memory 206.

At 516, optionally, the device software is updated with the device software update. For example the bootloader application 234 is executed to perform updating the device software with the device software update 122 before the device is powered off. At 518, the device is powered-down. For example, the bootloader application 234 powers-down the device 104 with the device software update 122 available from the device memory 206 when the device is subsequently powered on.

FIG. 6 illustrates various components of an example device 600 in which embodiments of RFID-based device wireless updates can be implemented. The example device 600 can be implemented as any of the devices described with reference to the previous FIGS. 1-5, such as any type of client device, mobile phone, tablet, computing, communication, entertainment, gaming, media playback, and/or other type of electronic device. For example, the devices 104 shown in FIGs. 1 and 2, as well as the server devices, may be implemented as the example device 600.

The device 600 includes communication transceivers 602 that enable wired and/or wireless communication of device data 604 with other devices, such as the device identifier 110, the software version indicator 112, and the other device software status information 108 as described with reference to the devices 104 shown in FIGs. 1 and 2. Additionally, the device data can include any type of audio, video, and/or image data. Example transceivers include wireless personal area network (WPAN) radios compliant with various IEEE 802.15 (Bluetooth^{™}) standards, wireless local area network (WLAN) radios compliant with any of the various IEEE 802.11 (WiFi^{™}) standards, wireless wide area network (WWAN) radios for cellular phone communication, wireless metropolitan area network (WMAN) radios compliant with various IEEE 802.15 (WiMAX^{™}) standards, and wired local area network (LAN) Ethernet transceivers for network data communication.

The device 600 may also include one or more data input ports 606 via which any type of data, media content, and/or inputs can be received, such as user-selectable inputs to the device, messages, music, television content, recorded content, and any other type of audio, video, and/or image data received from any content and/or data source. The data input ports may include USB ports, coaxial cable ports, and other serial or parallel connectors (including internal connectors) for flash memory, DVDs, CDs, and the like. These data input ports may be used to couple the device to any type of components, peripherals, or accessories such as microphones and/or cameras.

The device 600 includes a processing system 608 of one or more processors (*e*.*g*., any of microprocessors, controllers, and the like) and/or a processor and memory system implemented as a system-on-chip (SoC) that processes computer-executable instructions. The processor system may be implemented at least partially in hardware, which can include components of an integrated circuit or on-chip system, an application-specific integrated circuit (ASIC), a field-programmable gate array (FPGA), a complex programmable logic device (CPLD), and other implementations in silicon and/or other hardware. Alternatively or in addition, the device can be implemented with any one or combination of software, hardware, firmware, or fixed logic circuitry that is implemented in connection with processing and control circuits, which are generally identified at 610. The device 600 may further include any type of a system bus or other data and command transfer system that couples the various components within the device. A system bus can include any one or combination of different bus structures and architectures, as well as control and data lines.

The device 600 also includes computer-readable storage memory 612 that enable data storage, such as data storage devices that can be accessed by a computing device, and that provide persistent storage of data and executable instructions (*e*.*g*., software applications, programs, functions, and the like). Examples of the computer-readable storage memory 612 include volatile memory and non-volatile memory, fixed and removable media devices, and any suitable memory device or electronic data storage that maintains data for computing device access. The computer-readable storage memory can include various implementations of random access memory (RAM), read-only memory (ROM), flash memory, and other types of storage media in various memory device configurations. The device 600 may also include a mass storage media device.

The computer-readable storage memory 612 provides data storage mechanisms to store the device data 604, other types of information and/or data, and various device applications 614 (*e*.*g*., software applications). For example, an operating system 616 can be maintained as software instructions with a memory device and executed by the processing system 608. The device applications may also include a device manager, such as any form of a control application, software application, signalprocessing and control module, code that is native to a particular device, a hardware abstraction layer for a particular device, and so on. In this example, the device 600 includes a bootloader application 618 that implements embodiments of RFID-based device wireless updates, and may be implemented with hardware components and/or in software, such as when the device 600 is implemented as the device 104 described with reference to FIGS. 1-5. An example of the bootloader application 618 is the bootloader application 234 that is implemented as an application in the device 104.

The device 600 also includes a radio-frequency identification (RFID) tag 620, such as described with reference to the RFID tag 218 implemented in the device 104. The device 600 can also include one or more device sensors 622, such as any one or more of an ambient light sensor, a proximity sensor, a touch sensor, an infrared (IR) sensor, and the like from which a stowed context of the device can be determined. The device 600 can also include one or more power sources 624, such as when the device is implemented as a mobile device. The power sources may include a charging and/or power system, and can be implemented as a flexible strip battery, a rechargeable battery, a charged super-capacitor, and/or any other type of active or passive power source.

The device 600 also includes an audio and/or video processing system 626 that generates audio data for an audio system 628 and/or generates display data for a display system 630. The audio system and/or the display system may include any devices that process, display, and/or otherwise render audio, video, display, and/or image data. Display data and audio signals can be communicated to an audio component and/or to a display component via an RF (radio frequency) link, S-video link, HDMI (high-definition multimedia interface), composite video link, component video link, DVI (digital video interface), analog audio connection, or other similar communication link, such as media data port 632. In implementations, the audio system and/or the display system are integrated components of the example device. Alternatively, the audio system and/or the display system are external, peripheral components to the example device.

Although embodiments of RFID-based device wireless updates have been described in language specific to features and/or methods, the subject of the appended claims is not necessarily limited to the specific features or methods described. Rather, the specific features and methods are disclosed as example implementations of RFID-based device wireless updates, and other equivalent features and methods are intended to be within the scope of the appended claims. Further, various different embodiments are described and it is to be appreciated that each described embodiment can be implemented independently or in connection with one or more other described embodiments.

## Claims

1. A method, comprising:
interrogating a radio-frequency identification (RFID) tag of a device with a RFID reader;
determining that device software is not a latest version based on a response of a software version indicator from the RFID tag;
communicating wireless network connection information to the RFID tag of the device, the RFID tag including memory to maintain the wireless network connection information that is associated with a wireless network;
communicating a file location of a device software update to the RFID tag, the memory maintaining the file location;
communicating a power-up command to the RFID tag effective to initiate the RFID tag enabling an interrupt line to power the device on, initiating the device to download the device software update from the file location utilizing the wireless network connection information.

2. The method as recited in claim 1, further comprising:
communicating an update indicator to the RFID tag of the device effective to set an update enable flag in the memory of the RFID tag, the update enable flag serving as a software update indication for a bootloader application of the device when the device is powered-up.

3. The method as recited in claim 1 or claim 2, wherein the wireless network connection information comprises an identification of the wireless network and network credentials to join the wireless network.

4. The method as recited in any of claims 1 to 3, wherein said initiating the device to download the device software update stored on a server device via the wireless network based on the file location as a universal resource locator (URL) to the server device.

5. The method as recited in any of claims 1 to 4, wherein said interrogating the RFID tag of a device with the RFID reader while the device is powered off.

6. The method as recited in any of claims 1 to 5, wherein said determining that the device software is not the latest version further comprises:
communicating the software version indicator to a server device that compares software versions to assess whether the device software for the device is the latest version; and
receiving the determination from the server device that the device software is not the latest version.

7. A method, comprising:
powering-up a device when a radio-frequency identification (RFID) tag of the device enables an interrupt line to power the device on;
determining from an update enable flag stored in memory of the RFID tag that a device software update to device software is available;
obtaining wireless network connection information stored in the memory of the RFID tag effective to configure a wireless radio system of the device for communication via a wireless network;
obtaining a file location of the device software update from the memory of the RFID tag; and
downloading the device software update from the file location via the wireless network.

8. A method as recited in claim 7, further comprising:
storing the device software update in device memory; and
powering-down the device with the device software update available from the device memory when the device is subsequently powered on.

9. A method as recited in claim 7 or claim 8, further comprising:
storing the device software update in device memory;
executing a bootloader application that performs updating the device software with the device software update; and
powering-down the device.

10. A method as recited in any of claims 7 to 9, further comprising:
receiving an interrogation of the RFID tag from a RFID reader;
responding with a software version indicator of the device software; and
receiving a power-up command to the RFID tag from the RFID reader initiating said powering-up the device based on a determination that the device software is not a latest version.

11. A method as recited in any of claims 7 to 10, further comprising:
receiving the wireless network connection information and the file location of the device software update from a RFID reader; and
storing the wireless network connection information and the file location of the device software update in the memory of the RFID tag of the device.

12. A method as recited in any of claims 7 to 11, further comprising:
receiving an update indicator from a RFID reader to indicate that the device software is not a latest version; and
storing the update enable flag in the memory of the RFID tag of the device responsive to receiving the update indicator.

13. A method as recited in any of claims 7 to 12, wherein the wireless network connection information comprises an identification of the wireless network and network credentials to join the wireless network.

14. A method as recited in any of claims 7 to 13, further comprising:
accessing the device software update stored on a server device via the wireless network based on the file location as a universal resource locator (URL) to the server device.

15. A device, comprising:
a radio-frequency identification (RFID) tag to receive a power-up command from a RFID reader and enable an interrupt line that powers-up the device;
a processing system to execute a bootloader application implemented to:
determine that a device software update is available;
obtain wireless network connection information stored in memory of the RFID tag effective to configure a wireless radio system of the device for communication via a wireless network;
obtain a file location of the device software update from the memory of the RFID tag; and
download the device software update from the file location via the wireless network.

16. The device as recited in claim 15, further comprising:
a device memory to store the device software update that is downloaded to the device; and
the bootloader application initiates to power-down the device.

17. The device as recited in claim 15 or claim 16, wherein the RFID tag is implemented to:
receive an interrogation from the RFID reader; and
respond with a software version indicator of the device software.

18. The device as recited in any of claims 15 to 17, wherein the RFID tag is implemented to receive the wireless network connection information and the file location of the device software update from the RFID reader, the wireless network connection information comprising an identification of the wireless network and network credentials to join the wireless network.

19. The device as recited in any of claims 15 to 18, wherein the RFID tag is implemented to receive an update indicator from the RFID reader to indicate that the device software is not a latest version, and store an update enable flag in the memory of the RFID tag of the device.

20. The device as recited in any of claims 15 to 19, wherein the bootloader application is implemented to access the device software update stored on a server device via the wireless network based on the file location as a universal resource locator (URL) to the server device.
